# EUROPÄISCHE PATENTANMELDUNG

(11) **EP 2 096 051 A1**
(43) Veröffentlichungstag der Anmeldung: **02.09.2009**
(21) Anmeldenummer: 08405062.4
(22) Anmeldetag: 29.02.2008
(51) Int. Cl.: B65G 17/12, B65G 35/06

(54) **Förderanlage**

(71) Anmelder: vR Systems AG, 2800 Delémont (CH)
(72) Erfinder: Hulmann, Louis, 2873 Saulcy (CH); Périnat, Jean-Jacques, 2830 Courrendlin (CH)
(74) Vertreter: Wagner, Wolfgang Heribert

(57) **Zusammenfassung**

Ein Schienenabschnitt (1) umfasst ein in einem Graben (7) angebrachtes, von einer Vergussmasse (8) umgebenes U-Profil (3), das am Boden des Grabens (7) abgestützt ist und einen Kanal (9) bildet, in dem ein separates Trägerprofil (15) am Boden des Kanals (9) abgestützt und zwischen seinen Seitenwänden verspannt ist. Das Trägerprofil (15) trägt eine Gleitschiene (18), über welche eine antreibbare Kette (19) läuft. Flansche (6a,b) des U-Profils (3) sind mit streifenförmigen Metallplatten (10a;b) verschraubt, die den Kanal (9) bis auf einen mittigen Spalt (12) bedecken und Laufflächen für Laufräder (11) eines Wagens (2) bilden, der eine Mitnehmerleiste (13) trägt, welche durch den Spalt (12) hindurch mit der Kette (19) reibschlüssig eingreift. Nach Abnahme der Metallplatten (10a,b) und Lösen von Spannschrauben kann das Trägerprofil (15) dem Kanal (9) leicht nach oben entnommen und ersetzt werden, sodass z.B. Stossstellen zwischen aufeinanderfolgenden Schienenabschnitten leicht verlegt werden können.

## Beschreibung

### Technisches Gebiet

Die Erfindung betrifft eine Förderanlage gemäss dem Oberbegriff des Anspruchs 1. Derartige Förderanlagen werden insbesondere zur Beförderung von schweren Papierrollen, etwa vom Lager zu einem Rollenständer, in Druckereien verwendet. Es sind aber auch andere Anwendungen wie die Beförderung schwerer Teile in Montagehallen möglich. Meist handelt es sich um grössere, zentral gesteuerte Anlagen mit einer Schienenanordnung, die mehrere gerade Schienenabschnitte umfasst, die z.B. durch Drehscheiben oder Verschiebewagen verbunden sind und mehrere Wagen.

### Stand der Technik

Eine gattungsgemässe Förderanlage ist aus EP 0 587 015 A1 bekannt. Bei dieser an sich bewährten Anlage sind auch die Laufflächen unterflur angeordnet, was eine kompliziert aufgebaute Schienenanordnung mit grosser Bauhöhe erfordert. Dies erhöht die Kosten der Anlage. Aenderungen nach Fertigstellung sind nur mit grossem Aufwand möglich.

Aus CH 669 167 A5 ist eine grundsätzlich ähnlich aufgebaute Förderanlage für den Transport von Werkstücken bekannt, bei welcher die Laufflächen von Vierkantprofilen gebildet werden und das mit dem Wagen eingreifende Trum des Hüllgliedes in einem Kanal geführt ist. Der sonstige Verlauf des Hüllgliedes ist nicht ersichtlich. Die Schienenanordnung ist ebenfalls ziemlich kompliziert und nicht unmittelbar für eine Verlegung unterflur geeignet.

Eine ähnliche Förderanlage, welche ebenfalls der Verschiebung von Werkstücken zwischen Bearbeitungsstationen dienen soll, ist in EP 0 203 898 A2 beschrieben. Ihre Schienenanordnung ist ebenfalls ziemlich kompliziert aufgebaut und nicht für die Verlegung im Boden geeignet.

Eine weitere Förderanlage dieser Art, die dem Transport von Werkstücken bei der Schuhfabrikation dient, ist FR 2 269 840 A entnehmbar. Sie weist ähnliche Nachteile wie die beiden zuletzt genannten Förderanlagen auf.

Eine Förderanlage, bei welcher die Laufräder des Wagens auf einem ebenen Boden abrollen, ist in JP 1989/156 453 A dargestellt. Die Schienenanordnung umfasst hier lediglich einen Führungsschlitz, in welchen ein Führungsfortsatz des Wagens mit zwei Rollen eingreift. Da die Wagen nicht von der Schienenanordnung angetrieben werden, benötigt jeder einen batteriebetriebenen eigenen Antrieb und muss, z.B. über Funk, gesteuert werden. Dies erhöht die Anlagenkosten. Steuerung über Funk ist zudem störungsanfällig und aufwendig. Ausserdem kompliziert die Notwendigkeit, die Batterien nachzuladen, die Abläufe.

### Darstellung der Erfindung

Der Erfindung liegt die Aufgabe zu Grunde, eine gattungsgemässe Förderanlage derart zu verbessern, dass sie möglichst einfach im Aufbau und entsprechend kostengünstig in der Erstellung ist. Diese Aufgabe wird durch die Merkmale im Kennzeichen des Anspruchs 1 gelöst.

Die Erfindung schafft eine Förderanlage mit im wesentlichen unterflur angeordneter Antriebseinheit, welche äusserst einfach aufgebaut ist. Die Laufflächen sind auf der Ebene des Bodens angeordnet, was den Aufbau der Schienenanordnung wesentlich vereinfacht, ohne dass überflur angeordnete, eventuell störende Teile dafür in Kauf genommen werden müssten. Der Träger ist ebenfalls leicht zu montieren und auch leicht zu entfernen oder zu ersetzen. Er kann sämtliche erforderlichen Teile tragen, neben der Gleitschiene und dem Hüllglied etwa Sensoren, Markierungen und Kabel. Eine Aenderung der Anlage nach Fertigstellung kann sich daher auf Aenderungen am Träger oder einen Austausch desselben beschränken und ist entsprechend einfach zu bewerkstelligen. Auch Stossstellen, an denen zwei jeweils ein Hüllglied tragende Träger aneinander anschliessen, können bei Bedarf durch Ersetzen der Träger leicht verlegt werden.

### Kurze Beschreibung der Zeichnungen

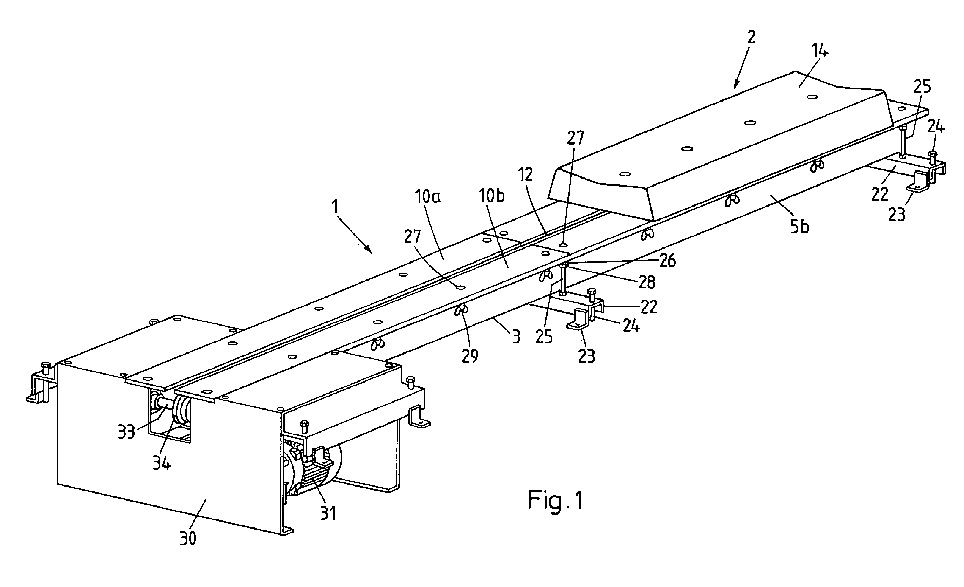

Im folgenden wird die Erfindung anhand von Figuren, welche lediglich ein Ausführungsbeispiel darstellen, näher erläutert. Es zeigen
- Fig. 1: einen Schienenabschnitt einer erfindungsgemässen Förderanlage mit einem Wagen in perspektivischer Darstellung,
- Fig. 2: einen Teil des Schienenabschnitts und den Wagen gemäss Fig. 1 in Seitenansicht,
- Fig. 3: einen Schnitt längs III-III in Fig. 2, in dem auch die Einbettung des Schienenabschnitts in einem Boden dargestellt ist und

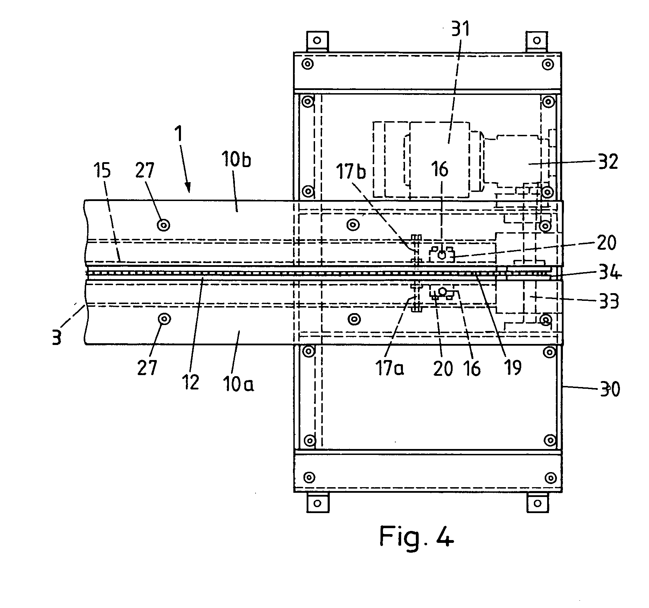

- Fig. 4: eine Draufsicht auf einen Teil des Schienenabschnitts gemäss Fig. 1.

### Wege zur Ausführung der Erfindung

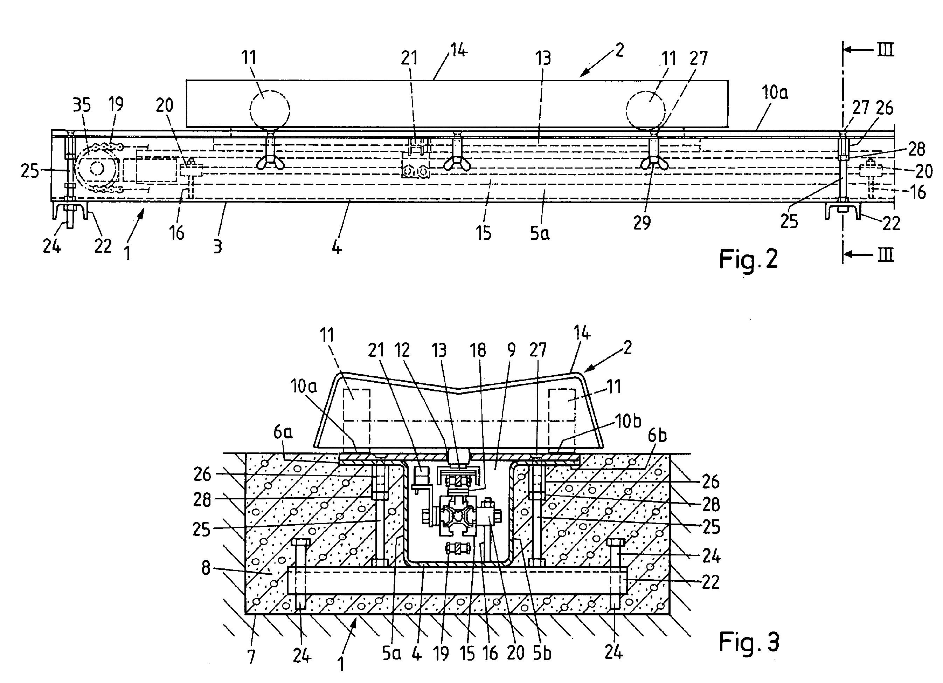

Die in den Figuren dargestellte erfindungsgemässe Förderanlage umfasst einen geraden Schienenabschnitt 1 einer Schienenanordnung, über welche ein Wagen 2 verschiebbar ist. Der Schienenabschnitt 1 umfasst ein ein U-Profil 3 aus Stahl oder Aluminium, mit einer ebenen, waagrechten Bodenplatte 4 und senkrechten Seitenstegen 5a,b, an deren oberen Rändern nach aussen weisende Flansche 6a,b anschliessen und das gewöhnlich in einem Graben 7 (s. Fig. 3) angeordnet ist, welcher eine Vertiefung rechteckigen Querschnitts in einem umgebenden Bodenstreifen z.B. aus Beton bildet. Der Graben 7 ist mit einer Vergussmasse 8, gewöhnlich ebenfalls Beton, ausgegossen, derart, dass nur ein von der Bodenplatte 4 und den Seitenstegen 5a,b des U-Profils 3 umgebener Kanal 9, dessen Boden von der Bodenplatte 4 und dessen Seitenwände von den Seitenstegen 5a,b gebildet werden, frei ist. Auf jedem der Flansche 6a,b ist eine längliche, zum U-Profil 3 parallele streifenförmige Metallplatte 10a;b, vorzugsweise aus Stahl, befestigt. Die Oberseiten der Metallplatten 10a,b bilden Laufflächen für Laufräder 11 des Wagens 2. Zwischen den Metallplatten 10a,b liegt ein schmaler mittiger Spalt 12, durch den hindurch eine im Kanal 9 liegende Mitnehmerleiste 13 über eine federnde Aufhängung mit einem nicht näher dargestellten Fahrgestell des Wagens 2 verbunden ist, das ausserdem eine Mulde 14 zur Aufnahme einer Papierrolle trägt.

Eine Antriebseinheit umfasst einen im Kanal 9 angeordneten, sich über die ganze Länge eines Schienenabschnitts 1 erstreckenden länglichen Träger, welcher vorzugsweise als z.B. aus Aluminium bestehendes extrudiertes einstückiges Trägerprofil 15 gleichbleibenden Querschnitts ausgebildet ist. Das Trägerprofil 15 liegt mit Abstand zum Boden 4 und den Seitenstegen 5a,b im Kanal 9. Das Trägerprofil 15 ist lediglich durch Stützschrauben 16 höhenverstellbar an der Bodenplatte 4 des U-Profils 3 abgestützt und durch Spannschrauben 17a,b zwischen seinen Seitenstegen 5a,b verspannt. Diese Verbindungen sind leicht lösbar und erfordern keine Teile am U-Profil 3, mit denen sie eingreifen müssten, sodass sie an jeder beliebigen Stelle des Trägerprofils 15 angebracht werden können. Da das Trägerprofil 15 ein separates Teil ist, dessen Breite geringer ist als die Weite des Kanals 9, sodass es nach Lösen allfälliger Verbindungen seitliches Spiel hat und besagte Verbindungen leicht und reversibel lösbar sind, kann es nach Entfernen der Metallplatten 10a,b leicht in den Kanal 9 eingebracht und aus demselben entfernt, d.h. herausgehoben und gewartet oder ersetzt werden. U.U. genügt auch eine einseitige Abstützung ohne zusätzliche Befestigung im Kanal.

Am Trägerprofil 15 sind auch alle für die Steuerung und Bewegung des Wagens 2 nötigen Komponenten angeordnet. An seiner Oberseite ist eine Gleitschiene 18 aus Kunststoff befestigt, über die ein oberes Trum eines geschlossenen Hüllglieds, nämlich einer Kette 19 läuft, deren unteres Trum unterhalb des Trägerprofils 15, im durch die Beabstandung desselben von der Bodenplatte 4 hergestellten Zwischenraum, zurückläuft. Die Stützschrauben 16 und Spannschrauben 17a,b sind an Hammermuttern 20 befestigt, die in Nuten am Trägerprofil 15 eingeklinkt sind. Auf gleiche Weise ist ein Sensor 21 am Trägerprofil 15 festgemacht. Die Hammermuttern 20 können leicht ausgeklinkt und entfernt oder an anderer Stelle wieder eingeklinkt werden. Der Sensor 21 kann ein optischer, akustischer, induktiver oder anderer Sensor sein, der die Anwesenheit oder Abwesenheit der Mitnehmerleiste 13 und damit des Wagens 2 feststellt. Es kann sich auch um einen Balkencode-Leser handeln, der einen für den jeweiligen Wagen 2 spezifischen Balkencode abliest. Allfällige Kabel sind entweder am Trägerprofil 15 oder sonst neben oder unter demselben im Kanal 9 angeordnet.

Die Bodenplatte 4 des U-Profils 3 ist in bestimmten Abständen auf Querträgern abgestützt, die als nach unten offene U-Schienen 22 ausgebildet sind, auf denen er aufliegt und die jeweils durch Laschen 23 oder höhenverstellbar durch Stellschrauben 24 auf dem Boden des Grabens 7 abgestützt sind. Jede der U-Schienen 22 steht seitlich über die Bodenplatte 4 über und ist mittels eines Spannbolzens 25 durch den Flansch 6a;b hindurch mit den Metallplatten 10a,b verspannt. Dazu ist auf das obere Ende des Spannbolzens 25 eine längliche Mutter, hier eine bequemes Ansetzen eines Schraubenschlüssels gestattende Sechskantmutter 26, aufgeschraubt, in welche von oben eine durch Bohrungen in der Metallplatte 10a;b und dem Flansch 6a;b ragende Befestigungsschraube 27 eingeschraubt ist, deren Kopf die Metallplatte 10a;b und dadurch den Flansch 6a;b, der in entspanntem Zustand leicht nach aussen ansteigt, unter leichter elastischer Deformation gegen das obere Ende der Sechskantmutter 26 drückt, die durch eine Kontermutter 28 fixiert ist. Am unteren Ende ist der Spannbolzen 25 durch zwei Muttern unverschiebbar an der U-Schiene 22 festgelegt. Die Metallplatten 10a,b sind daher mit der U-Schiene 22 verspannt. Zudem ist jede der Metallplatten 10a,b in regelmässigen Abständen mit dem entsprechenden Flansch 6a;b verbunden, indem jeweils in eine Gewindebohrung einer unterhalb des Flansches 6a;b liegenden Flügelmutter 29 durch Bohrungen in der Metallplatte 10a;b und dem Flansch 6a;b ebenfalls eine Befestigungsschraube 27 eingeschraubt ist. Die Flügelmuttern 29 stellen eine sehr feste Verankerung in der Vergussmasse 8 sicher.

An einem Ende des Schienenabschnitts 1 ist der Graben 7 zu einer rechteckigen, etwas breiteren und tieferen Grube erweitert, in der ein Gehäuse 30 aus Stahl mit an der Oberseite abnehmbaren Platten angeordnet ist, in welches das U-Profil 3 ein Stück weit hineinragt, während die Metallplatten 10a,b und z.T. auch die Flansche 6a,b bis zu seinem gegenüberliegenden Rand durchlaufen. Im Gehäuse 30 sind weitere Teile der Antriebseinheit untergebracht. Neben dem U-Profil 3 und etwas tiefer als dasselbe ist ein Elektromotor 31 angeordnet, der über ein Winkelgetriebe 32 eine knapp hinter dem Ende des U-Profils 3 quer zu demselben verlaufende und waagrecht im Gehäuse 30 gelagerte Achse 33 antreibt, welche als Antriebsrad ein Kettenrad 34 trägt, über welches die Kette 19 läuft. Knapp vor dem gegenüberliegenden Ende des U-Profils 3 ist in ähnlicher Weise ein als freilaufendes Kettenrad 35 ausgebildetes Umlenkrad zum Umlenken der Kette 19 gelagert.

Bei der Herstellung der Schienenanordnung 1 wird das U-Profil 3 im Graben 7 positioniert und die Höhe durch die Stellschrauben 24 so eingestellt, dass die Flansche 6a,b bezogen auf den den Graben 7 umgebenden Boden etwa die richtige Höhe haben. Anschliessend werden die Metallplatten 10a,b auf die Flansche 6a;b aufgelegt und mittels der Befestigungsschrauben 27, die in die Sechskantmuttern 26 und die Flügelmuttern 29 eingeschraubt werden, mit ihnen verbunden. Durch Drehen der Sechskantmuttern 26 wird dann die Höhe der Metallplatten 10a,b feineingestellt, derart, dass die Laufflächen genau auf der Höhe des umgebenden Bodenstreifens liegen. Dabei wird über die Spannbolzen 25 ein Zug auf die Flansche 6a,b ausgeübt, die leicht nach unten gebogen werden. Anschliessend wird die Vergussmasse 8 eingefüllt, bis sie den Graben 7 genau ausfüllt, wobei der Kanal 9 und das Innere des Gehäuses 30 durch das U-Profil 3 bzw. das letztere gegen ein Eindringen von Vergussmasse abgeschirmt sind. Durch die beschriebenen Massnahmen wird sichergestellt, dass die Laufflächen und die anschliessende obere Grenzfläche der Vergussmasse 8 genau auf der Höhe des umgebenden Bodenstreifens liegen und somit der durchgehend ebene Boden lediglich durch den Spalt 12 unterbrochen wird.

Nach dem Aushärten der Vergussmasse 8 werden die Metallplatten 10a,b nach Lösen der Befestigungsschrauben 27 entfernt, sodass der Kanal 9 freiliegt. Anschliessend wird das Trägerprofil 15, an dem bereits alle anderen für Bewegung und Ueberwachung des Wagens 2 erforderlichen Teile wie die Kette 19 und der Sensor 21 angebracht sind, im Kanal 9 angeordnet und mittels der Stützschrauben 16 in der Höhe eingestellt sowie mittels der Spannschrauben 17a,b am U-Profil 3 fixiert und die Metallplatten 10a,b wieder befestigt. Das Trägerprofil 15 kann nach Abnehmen der Metallplatten 10a,b und Lösen der Spannschrauben 17a,b jederzeit leicht wieder aus dem Kanal 9 herausgehoben werden, ohne dass das U-Profil 3 oder die Vergussmasse 8 davon berührt würden.

Im Betrieb wird der Wagen 2 mittels der vom Elektromotor 31 angetriebenen Kette 19 verschoben, mit der die Mitnehmerleiste 13 reibschlüssig eingreift. Wegen der Länge der Mitnehmerleiste 13 überbrückt sie dabei den Abstand von der Kette des Schienenabschnitts 1 zu derjenigen eines anschliessenden Schienenabschnitts ohne Schwierigkeiten. Der Wagen 2 ist ein gänzlich passives Element und kann daher sehr einfach aufgebaut und entsprechend billig sein.

Es sind verschiedene Abwandlungen des beschriebenen Beispiels möglich, ohne dass der Bereich der Erfindung verlassen würde. So kann der Kanal durch eine durchgehende Längswand unterteilt und ein Kabelkanal abgetrennt sein. Die Metallplatten und selbst die Flansche des U-Profils sind nicht in jedem Fall erforderlich. Auch die Oberseite der ausgehärteten Vergussmasse kann u.U. ausreichend feste Laufflächen für die Laufräder des Wagens bilden. Die Flansche des U-Profils können in diesem Fall sehr schmal und nach innen gebogen sein und lediglich mit ihnen verschraubte Abdeckbleche tragen, die den Kanal bis auf den Spalt bedecken.

Die Schienenanordnung kann mehrere in gerader Linie aufeinanderfolgende Schienenabschnitte mit jeweils einem Trägerprofil aufweisen, das vorzugsweise durchgehend ausgebildet ist, aber auch unterbrochen sein kann, wobei, wenn die Antriebseinheiten an entgegengesetzten Enden liegen, ein U-Profil über zwei Schienenabschnitte durchgehend ausgebildet sein kann. Die Schienenanordnung kann auch Drehscheiben oder quer verfahrbare Verschiebewagen umfassen, die jeweils einen eigenen Schienenabschnitt tragen. Das Fahrgestell des Wagens 2 kann wie dargestellt eine Mulde 14 zur Aufnahme einer Papierrolle tragen, doch kann der Wagen auch z.B. einen Adapter zur Aufnahme eines Abfallkorbs oder anderer Gegenstände aufweisen.

### Bezugszeichenliste

- 1: Schienenanordnung
- 2: Wagen
- 3: U-Profil
- 4: Boden
- 5a,b: Seitenstege
- 6a,b: Flansche
- 7: Graben
- 8: Vergussmasse
- 9: Kanal
- 10a,b: Metallplatten
- 11: Laufräder
- 12: Spalt
- 13: Mitnehmerleiste
- 14: Mulde
- 15: Trägerprofil
- 16: Stützschraube
- 17a,b: Spannschraube
- 18: Gleitschiene
- 19: Kette
- 20: Hammermutter
- 21: Sensor
- 22: U-Schiene
- 23: Lasche
- 24: Stellschraube
- 25: Spannbolzen
- 26: Sechskantmutter
- 27: Befestigungsschraube
- 28: Kontermutter
- 29: Flügelmutter
- 30: Wanne
- 31: Elektromotor
- 32: Winkelgetriebe
- 33: Achse
- 34, 35: Kettenrad

## Patentansprüche

1. Förderanlage mit einer Schienenanordnung mit mindestens einem sich längs eines ebenen Bodenstreifens erstreckenden Schienenabschnitt (1), welcher zwei parallele ebene Laufflächen aufweist sowie eine unterflur angeordnete Antriebseinheit mit einem parallel zu den Laufflächen über eine ortsfeste Gleitschiene (18) geführten Hüllglied, das über ein antreibbares, ortsfestes Antriebsrad läuft, sowie mit mindestens einem längs des Schienenabschnitts (1) verschiebbaren Wagen (2) mit einem Fahrgestell, das auf den Laufflächen rollende Laufräder (11) trägt und einem Mitnehmer, der durch einen zwischen den Laufflächen angeordneten Spalt (12) mit dem Hüllglied eingreift, **dadurch gekennzeichnet, dass** die Laufflächen auf der Höhe des Bodenstreifens liegen und der Schienenabschnitt (1) einen zwischen den Laufflächen liegenden, zu denselben parallelen, an seiner Unterseite von einem Boden und seitlich von Seitenwänden begrenzten, von oben durch den Spalt (12) zugänglichen Kanal (9) umfasst und die Antriebseinheit einen in dem Kanal (9) angeordneten separaten länglichen Träger, der an der Oberseite die Gleitschiene (18) für das Hüllglied trägt.

2. Förderanlage nach Anspruch 1, **dadurch gekennzeichnet, dass** der Träger als Trägerprofil (15) ausgebildet ist, welches mit Abstand von mindestens einer der Seitenwände im Kanal (9) angeordnet und an dessen Boden, vorzugsweise höhenverstellbar, abgestützt ist.

3. Förderanlage nach Anspruch 1 oder 2, **dadurch gekennzeichnet, dass** das Trägerprofil (15) mittels Schrauben lösbar im Kanal befestigt ist, insbesondere durch Verspannung zwischen den Seitenstegen mittels Spannschrauben (17a, 17b).

4. Förderanlage nach einem der Ansprüche 1 bis 3, **dadurch gekennzeichnet, dass** der Boden und die Seitenwände des Kanals (9) von einer Bodenplatte (4) bzw. von an deren Ränder anschliessenden nach oben ragenden Seitenstegen (5a, 5b) eines U-Profils (3) gebildet werden.

5. Förderanlage nach Anspruch 4, **dadurch gekennzeichnet, dass** der Schienenabschnitt (1) einen Graben (7) umfasst, auf dessen Boden das U-Profil (3) abgestützt ist.

6. Förderanlage nach Anspruch 5, **dadurch gekennzeichnet, dass** das U-Profil (3) auf mindestens zwei in Längsrichtung beabstandeten, am Boden des Grabens (7) abgestützten Querträgern aufliegt.

7. Förderanlage nach Anspruch einem der Ansprüche 4 bis 6, **dadurch gekennzeichnet, dass** das U-Profil (3) an den oberen Rändern der Seitenstege (5a, 5b) seitlich nach aussen abragende Flansche (6a; 6b) aufweist, mit denen jeweils eine streifenfömige Metallplatte (10a; 10b) verbunden ist, deren Oberseite eine der Laufflächen bildet.

8. Förderanlage nach Anspruch 7, **dadurch gekennzeichnet, dass** die Metallplatte (10a, 10b) jeweils derart verspannt ist, dass ein nach unten gerichteter Zug auf sie ausgeübt wird.

9. Förderanlage nach den Ansprüchen 6 und 8, **dadurch gekennzeichnet, dass** die Verspannung jeweils durch einen am Querträger verankerten Schraubenbolzen (25) hergestellt ist sowie eine auf das obere Ende desselben aufgeschraubte Mutter und eine Befestigungsschraube (27), welche, durch Bohrungen in der Metallplatte (10a, 10b) und dem Flansch (6a; 6b) ragend, mit der Mutter verschraubt ist.

10. Förderanlage nach einem der Ansprüche 5 bis 9, **dadurch gekennzeichnet, dass** der Graben (7) mindestens über einen Teil seiner Länge derart mit einer Vergussmasse (8), vorzugsweise Beton, ausgegossen ist, dass dieselbe das U-Profil (3) unten und seitlich umgibt.
